# EUROPÄISCHE PATENTSCHRIFT

(11) **EP 2 261 718 B1**
(45) Veröffentlichungstag und Bekanntmachung des Hinweises auf die Patenterteilung: **01.08.2018**
(21) Anmeldenummer: 10177995.7
(22) Anmeldetag: 01.08.2005
(51) Int. Cl.: B01L 3/00, B29C 65/00, B29C 65/48, B29C 59/14, B29C 65/02, B29C 65/16, B29K 23/00, B29K 25/00, B29K 33/00, B29K 67/00, B29K 69/00, B29K 71/00, B29K 77/00

(54) **Verfahren zur Herstellung einer Probenkammer**
Method of fabrication a sample chamber
Procédé pour fabrication d'une chambre d'échantillon

(43) Veröffentlichungstag der Anmeldung: 15.12.2010
(62) Teilanmeldung aus: 05016687.5
(73) Patentinhaber: ibidi GmbH, 82152 Martinsried (DE)
(72) Erfinder: Kahl, Johan-Valentin, 80797, München (DE); Zantl, Roman, 85598, Baldham (DE)
(74) Vertreter: Grünecker Patent- und Rechtsanwälte PartG mbB

(56) Entgegenhaltungen:
- EP-A- 0 290 125
- WO-A-89/11500
- US-A- 4 756 884
- US-A- 5 597 456
- US-A- 6 083 355
- US-A1- 2002 146 557
- US-A1- 2005 164 373

## Beschreibung

Die Erfindung betrifft ein Verfahren zum Behandeln einer Reservoiroberfläche einer Probenkammer mit einer Deckplatte und einer fest damit verbundenen Bodenplatte, wobei in der Deckplatte eine Aussparung mit Grund vorgesehen ist, so dass durch die Bodenplatte ein Hohlraumreservoir gebildet wird.

Eine derartige Probenkammer ist beispielsweise aus der DE 101 48 210 bekannt. Die bekannte Probenkammer weist mikrofluidische Strukturen, wie Mikrofluidkanäle oder -reservoire, auf. Bei der aus der DE 101 48 210 bekannten Probenkammer ist eine Nut in einer Kunststoffplatte vorgesehen, die durch eine Folie abgedeckt wird, so dass ein Mikrokanal gebildet wird. Auf der der Nut gegenüberliegenden Oberfläche der Kunststoffplatte sind zwei kreisförmige Reservoire angeordnet, die mit dem Kanal in Fluidverbindung stehen.

Die bekannten Probenkammern werden insbesondere zur Mikroskopie von Molekülen (Z. B. DNA) oder Zellen verwendet. Die zu untersuchenden Substanzen werden mit einer Flüssigkeit in ein Reservoir der Probenkammer gegeben und können dann mit hochauflösenden Verfahren (beispielsweise Durchlichtmikroskopie, Fluoreszenzmikroskopie, konfokale Mikroskopie, etc.) untersucht werden. Aus dem Stand der Technik sind verschiedene Verfahren bekannt, Probenkammern oder andere medizinische Geräte mittels Plasmabehandlung zu hydrophilisieren, siehe z.B. US 4,756,884, US 5,597,456 und US 2002/146557.

Die Erfindung stellt ein Verfahren zum Oberflächenbehandeln, insbesondere zum Hydrophilisieren einer Reservoiroberfläche in einer Probenkammer bereit, wobei die Probenkammer eine Deckplatte und eine fest damit verbundene Bodenplatte aufweist, wobei in der Deckplatte eine Aussparung mit Grund vorgesehen ist, so dass durch die Bodenplatte ein Hohlraumreservoir gebildet wird, mit den Schritten:
Führen eines Plasmas oder eines Abgases eines Plasmas zu einem Zu-/Abfluss des Hohlraumreservoirs, wo es in das Hohlraumreservoir geleitet werden kann,
Führen des Plasmas oder des Abgases des Plasmas durch das Hohlraumreservoir zur Plasmabehandlung der Reservoiroberfläche,
wobei für das Plasmabehandeln ein Atmosphärenplasma mit Stickstoff als Wirkgas verwendet wird.

Überraschenderweise stellte sich heraus, dass es möglich ist, ein Plasma in derartige Mikrostrukturen zu führen, um dort die Oberfläche zu hydrophilisieren.

Das Plasmabehandeln erfolgt mit einem Atmosphärenplasma mit Stickstoff als Wirkgas. Dabei wird unter einem Atmosphärenplasma ein Plasma verstanden, das nicht im Unterdruck im Verhältnis zum Atmosphärendruck gezündet wird. Es hat sich gezeigt, dass bei der Verwendung von Stickstoff die Oberflächenfunktionalisierung wie z.B. eine Hydrophilisierung ausgeprägter und langlebiger ist.

Wird das Plasma durch den Hohlraum geführt, ist in diesem üblicherweise ein Leuchten deutlich sichtbar.

Das Plasmabehandeln kann ein Kühlen des Plasmas und/oder der Probenkammer umfassen. Auf Grund dieses Kühlens kann ein Anschmelzen oder Verbrennen des Probenkammermaterials vermieden werden.

Vorzugsweise wird das Plasma nach seiner Erzeugung beispielsweise durch ein Metallrohr zu einem Zu-/Abfluss des Reservoirs geführt, wo es in das Reservoir der Probenkammer geleitet werden kann.Es hat sich auch gezeigt, dass eine Oberflächenbehandlung wie eine Hydrophilisierung der Oberflächen durch die Verwendung von Abgasen aus einem Plasma realisiert werden kann. In diesem Fall kann das Plasmabehandeln erfolgen, in dem ein Plasmaabgas durch das Hohlraumreservoir geführt wird. Dazu kann z.B. ein Stickstoffplasma gezündet und anschließend das dort ionisierte/aktivierte Gas durch ein Rohr geführt werden (z.B. 10cm bis 1m). Wird dieses Gas direkt vom (kalten) Rohrende in einen Hohlraum geführt, werden die Innenseiten des Hohlraumes ebenfalls hydrophilisiert. Typischerweise ist im Hohlraum dann kein Leuchten des Plasmas sichtbar.

Die zuvor beschriebenen Verfahren zum Oberflächenbehandeln wie z.B. zum Hydrophilisieren können insbesondere für eine der nachfolgend beschriebenen Probenkammern verwendet werden.

In dem Reservoir der Probenkammer kann ein flächiges Element mit Öffnungen vorgesehen sein, wobei die Öffnungen eine vorherbestimmte Anordnung und/oder Dimensionierung aufweisen.

In den Öffnungen des flächigen Elements können zu untersuchende Moleküle oder Zellen gehalten werden und auf Grund einer vorherbestimmten Anordnung präzise lokalisiert werden. Damit können in derartigen Probenkammern beispielsweise Suspensionskulturen gehalten werden. Auch bei einem Austausch von Flüssigkeiten verbleiben eingebrachte Moleküle oder Zellen in den Öffnungsstrukturen.

Das flächige Element kann insbesondere flexibel sein. Es kann ein Gewebe, insbesondere ein Netz, oder eine Folie umfassen. Derartige Materialien erlauben eine einfache Handhabung, insbesondere bei der Herstellung einer entsprechenden Probenkammer. Das flächige Element kann auch ein Elektronenmikroskopie-Grid umfassen, das beispielsweise Gold oder Kupfer umfasst und ggf. mit Kohlenstoff beschichtet sein kann. Bei dem Gewebe kann es sich insbesondere um ein offenmaschiges Monofilament-Gewebe handeln, wie beispielsweise die Präzisionsgewebe des Schweizer Herstellers Sefar. Das Material kann Polyamid (PA), Polyester (PET), Polypropylen (PP), Ethylen-Tetrafluorethylen-Copolymer (ETFE) oder Polyetheretherketon (PEEK) umfassen oder daraus bestehen.

Das flächige Element kann in dem Reservoir parallel zu der Bodenplatte angeordnet sein. Dies ermöglicht eine besonders vorteilhafte Beobachtung durch die Bodenplatte.

Das flächige Element kann zwischen der Bodenplatte und der Deckplatte eingespannt sein. Dies bedeutet, dass das flächige Element eine größere Fläche als die entsprechende Querschnittsfläche des Reservoirs (beispielsweise die Reservoirgrundfläche) aufweist. Bei der Herstellung der Probenkammer wird das flächige Element derart zwischen der Bodenplatte und der Deckplatte angeordnet, dass es nach dem Zusammenfügen und Verbinden der beiden zwischen die Bodenplatte und die Deckplatte geklemmt ist. Damit kann die Probenkammer in einfacher und zuverlässiger Weise hergestellt werden, wobei das flächige Element stabil und fest in dem Reservoir angeordnet ist.

Die Öffnungen des flächigen Elements können Durchmesser von 2 - 500 µm, vorzugsweise 10 - 200 µm, aufweisen, das flächige Element kann eine Dicke von 3 - 500 µm, vorzugsweise 40 - 300 µm, und/oder einen Abstand zu der Bodenplatte von 0 - 100 µm, vorzugsweise 0 - 10 µm, aufweisen. Das Flächengewicht des flächigen Elements kann zwischen 10 und 700 g/m², vorzugsweise 10 - 100 g/m², liegen. Die offene Fläche, d.h. die Gesamtfläche der Öffnungen an der Oberfläche bezogen auf die Gesamtfläche des flächigen Elements, kann zwischen 15 - 60 %, vorzugsweise zwischen 20 und 50 %, liegen. Bei einem offenmaschigen Gewebe oder Netz kann die Maschenweite zwischen 10 und 500 µm, vorzugsweise 10 -100 µm, und der Garndurchmesser zwischen 3 - 500 µm, vorzugsweise zwischen 10 und 100 µm, liegen.

Durch eine geeignete Wahl dieser Parameter kann das flächiges Element an die zu untersuchenden Substanzen genau angepasst werden. Bei Öffnungsdurchmessern in der Größenordnung des Durchmessers beispielsweise von zu untersuchenden Zellen kann in einer Öffnung jeweils eine Zelle gehalten werden. Bei der Verwendung von größeren Öffnungsdurchmessern können die Zellen dann in ihrer nativen dreidimensionalen Struktur wachsen.

Insbesondere können der Durchmesser der Öffnungen und/oder der Abstand zu der Bodenplatte konstant sein. Weiterhin können die Öffnungen regelmäßig, insbesondere auf einem Gitter, d.h. in Form eines Gitters, angeordnet sein.

Das flächige Element kann eine vorherbestimmte Farbe, ein vorherbestimme Eigenfluoreszenz, insbesondere kleiner oder gleich der Eigenfluoreszenz von COC oder COP oder eines herkömmlichen Deckglases (beispielsweise reinweißes Glas der hydrolytischen Klasse 1, wie Menzel-Deckglas, insbesondere mit der Stärke Nr. 1,5), und/oder einen vorherbestimmten Brechungsindex, insbesondere größer als 1,2 und/oder kleiner als 1,7, aufweisen.

Somit lassen sich die Parameter je nach Art der gewünschten Untersuchung geeignet anpassen. Beispielsweise kann für die Durchlichtmikroskopie ein kontrastreiches Material, insbesondere mit einer dunklen Farbe, verwendet werden. Bei Fluoreszenzmikroskopieuntersuchungen können, je nach Anwendung, Materialien mit einer hohen oder einer geringen Eigenfluoreszenz eingesetzt werden. Durch eine entsprechende
Wahl des Brechungsindizes kann das flächige Element sogar als Lichtleiter verwendet werden.

Das flächige Element kann wenigstens teilweise ein lösungsmittellösliches Material umfassen. Das flächige Element kann ein anderes Material umfassen als ein oder das Material der Bodeplatte und/oder der Deckplatte. Insbesondere kann das flächige Element ein Material umfassen, das bei einem ersten Lösungsmittel löslich ist, und die Bodenplatte und/oder die Deckplatte ein Material umfassen, das bei einem anderen Lösungsmittel löslich ist. Auf diese Weise kann in einer Probenkammer die Bodenplatte in dem Reservoir zunächst mit einem Lösungsmittel angelöst werden; das flächige Element kann derart angeordnet sein, dass es dabei in der angelösten Oberfläche einen Abdruck hinterlässt. Anschließend kann das flächige Material mit einem anderen Lösungsmittel aufgelöst werden, das die Oberfläche der Bodenplatte nicht angreift, so dass der Abdruck des flächigen Elements verbleibt.

Durch die fest mit der Deckplatte verbundene Bodenplatte wird die Aussparung auf einer Seite der Deckplatte abgedeckt, so dass ein Reservoir gebildet wird. Weist die Aussparung keinen Grund auf, ist sie also in Form eines Loches ausgebildet, wird ein nach einer Seite hin offenes Reservoir gebildet. Deckt die Bodenplatte die Unterseite ab, bildet also den Boden des Reservoirs, so ist das Reservoir nach oben offen.

Die Aussparung in der Deckplatte kann einen Grund aufweisen, so dass durch die Bodenplatte ein Hohlraum gebildet wird. Auf Grund eines solchen Hohlraumes in der Deckplatte und damit in der Probenkammer können von der Umgebung abgeschirmte Untersuchungen durchgeführt werden.

Die Aussparung in der Deckplatte kann eine längliche Form aufweisen. Beispielsweise kann die Aussparung eine Nut in der Deckplatte umfassen. In diesem Fall wird die Probenkammer in Form einer Flusskammer ausgebildet.

Die Deckplatte und/oder die Bodenplatte können derart ausgebildet sein, dass die Probenkammer einen von außen in das Reservoir mündenden Kanal umfasst. Insbesondere kann in der Deckplatte und/oder der Bodenplatte ein in das Reservoir mündendes Durchgangsloch ausgebildet sein. In der Deckplatte kann eine Nut zur Ausbildung des Kanals vorgesehen sein. Insbesondere können zwei oder mehr in das Reservoir mündende Kanäle vorgesehen sein.

Ein derartiger Kanal dient als Zu- oder Abfluss für das Reservoir, das auf diese Weise mit Flüssigkeiten und/oder anderen Substanzen befüllt werden kann.

Die der Aussparung gegenüberliegende Oberfläche der Deckplatte kann einen planaren Bereich und eine Erhöhung aufweisen, wobei in der Erhöhung eine Ausnehmung ausgebildet ist, die über einen Kanal mit dem Reservoir verbunden ist. Die Ausnehmung kann ebenfalls als Reservoir dienen und/oder zur Aufnahme einer Zuflusseinrichtung, wie einer Pipette, ausgebildet sein. Weiterhin kann ein ein- oder zweidimensionales Array von Erhöhungen (beispielsweise insgesamt 96 Erhöhungen) vorgesehen sein, wobei in jeder Erhöhung eine Ausnehmung ausgebildet ist.

Die Bodenplatte kann eine Dicke von 50 - 250 µm, vorzugsweise 100 - 200 µm, aufweisen. Eine solche Bodenplatte ermöglicht in vorteilhafter Weise eine Anwendung der inversen Mikroskopie.

Die Deckplatte, die Bodenplatte und/oder das flächige Element können einen Kunststoff, insbesondere ohne Doppelbrechung und/oder mit einer Eigenfluoreszenz, die im wesentlichen gleich der Eigenfluoreszenz eines herkömmlichen Deckglases ist, umfassen. Ein solcherart optisch hochwertiger Kunststoff verbessert Mikroskopieuntersuchungen, insbesondere bei der Anwendung von Fluoreszenzmikroskopie. Insbesondere kann die Bodenplatte ein flexibles Material, beispielsweise eine Folie, umfassen.

Die Bodenplatte, die Deckplatte und/oder das flächige Element können mittels Klebemittel, Lösungsmittel, UV-Behandlung, radioaktive Behandlung, Laserbehandlung oder thermischem Verschweißen verbunden sein. Das thermische Verschweißen kann flächig oder streifenförmig, insbesondere nur entlang des Rands der Bodenplatte und/oder der Deckplatte, erfolgt sein. Dies ermöglicht in vorteilhafter Weise eine feste Verbindung von Deckplatte und Bodenplatte.

Mögliche Kunststoffe sind beispielsweise COC (Cyclo-Olefin Copolymer), COP (Cyclo-Olefin Polymer), PE (Polyethylen), PS (Polystyrol), PC (Polycarbonat) oder PMMA (Polymethylmetacrylat).

Die Grundfläche der Probenkammer kann die Abmessungen eines herkömmlichen Mikroskopieobjektträgers, insbesondere eine Breite von 25,5 mm und eine Länge von 75,5 mm, oder einer Multititerplatte aufweisen. Das durch eine Aussparung in der Deckplatte gebildete Reservoir der Probenkammer kann ein Volumen von zwischen 10 und 200 µl, vorzugsweise zwischen 20 und 150 µl, aufweisen; die Höhe kann zwischen 5 µm und 1 mm, vorzugsweise zwischen 0,1 mm und 0,5 mm, die Breite zwischen 10 µm und 40 mm, vorzugsweise zwischen 1 und 10 mm, liegen. Die Höhe der Probenkammer in einem planaren Bereich der Deckplatte kann zwischen 0,5 und 5 mm, vorzugsweise zwischen 1 und 2 mm, insbesondere bei 1,7 mm, liegen. Weist die Deckplatte der Probenkammer eine Erhöhung auf, in der eine Ausnehmung ausgebildet ist, so kann das Volumen eines derart gebildeten Reservoirs zwischen 50 µl und 3 ml, vorzugsweise zwischen 80 µl und 2,5 ml liegen; die Höhe einer Erhöhung ausgehend von einem planaren Bereich kann zwischen 1 mm und 1,5 cm, vorzugsweise zwischen 5 mm und 1 cm, liegen.

Ein Verfahren zum Herstellen einer Probenkammer kann die Schritte aufweisen:
Bereitstellen einer Deckplatte und einer Bodenplatte, wobei in der Deckplatte eine Aussparung vorgesehen ist, um durch die Bodenplatte ein Reservoir zu bilden, und wobei die der Aussparung gegenüberliegende Oberfläche der Deckplatte einen planaren Bereich und eine Erhöhung aufweist,
Behandeln eines Bereichs der Oberfläche der Deckplatte und/oder der Bodenplatte, um eine Haftschicht zu erhalten,
Verpressen der Deckplatte und der Bodenplatte, um diese mittels der Haftschicht zu verbinden, wobei der planare Bereich und die Erhöhung in voneinander getrennten Schritten wenigstens teilweise mit Druck beaufschlagt werden.

Durch das Verpressen in zwei getrennten Schritten einerseits des planaren Bereichs und andererseits der Erhöhung können diese unterschiedlichen Bereiche sehr präzise und gleichmäßig mit einem geeigneten Druck beaufschlagt werden. Damit kann eine Verformung oder Zerstörung des Materials verhindert werden.

Das zuvor genannte Verfahren kann insbesondere zur Herstellung der zuvor beschriebenen Probenkammern verwendet werden.

Die Druckbeaufschlagung des planaren Bereichs kann mittels eines Presselements (oder Pressstempels) erfolgen, das an den Erhöhungen entsprechenden Stellen Aussparungen aufweist. Das Presselement kann derart ausgebildet sein, dass der planare Bereich der Deckplatte vollflächig mit Druck beaufschlagt wird. Alternativ oder zusätzlich können auch in Bereichen des Presselements, die Bereichen der Deckplatte entsprechen, an denen Aussparungen vorgesehen sind, Aussparungen vorgesehen sein. Damit können Zerstörungen auf Grund der Druckbeaufschlagung in diesen Bereichen vermieden werden.

Für die Druckbeaufschlagung der Erhöhungen kann ein zweites Presselement vorgesehen sein, das eine zu den Erhöhungen der Deckplatte komplementäre Form aufweist. Alternativ kann dieses Presselement eine planare Oberfläche aufweisen; auch damit lassen sich nur die Erhöhungen mit Druck beaufschlagen.

Die getrennten Schritte der Druckbeaufschlagung können in beliebiger Reihenfolge durchgeführt werden.

Das Behandeln eines Bereichs der Oberfläche, um eine Haftschicht zu erhalten, kann ein Aufbringen eines Klebemittels, ein Aufbringen eines Lösungsmittels zum Anlösen der Oberfläche, eine UV-Behandlung, eine radioaktive Behandlung oder eine Laserbehandlung umfassen. Insbesondere kann das Behandeln eines Bereichs der Oberfläche, ein Erwärmen der Oberfläche der Deckplatte und/oder der Bodenplatte über den Materialschmelzpunkt umfassen. Vorzugsweise kann dieses Erwärmen streifenförmig entlang des Rands der Bodenplatte und/oder der Deckplatte erfolgen.

Durch ein solches streifenförmiges thermisches Verschweißen wird der Rand der Probenkammer für viele Kriechmittel (wie sie beispielsweise bei der Verwendung von Ölimmersionen für die Mikroskopie auftreten) versiegelt. Da keine großflächige Erwärmung stattfindet, lassen sich Verformungen der Deckplatte und/oder der Bodenplatte vermeiden.

Es hat sich auch gezeigt, dass eine Oberflächenbehandlung wie eine Hydrophilisierung der Oberflächen durch die Verwendung von Abgasen aus einem Plasma realisiert werden kann. In diesem Fall kann das Plasmabehandeln erfolgen, in dem ein Plasmaabgas durch das Hohlraumreservoir geführt wird. Dazu kann z.B. ein Stickstoffplasma gezündet und anschließend das dort ionisierte/aktivierte Gas durch ein Rohr geführt werden (z.B. 10cm bis 1 m). Wird dieses Gas direkt vom (kalten) Rohrende in einen Hohlraum geführt, werden die Innenseiten des Hohlraumes ebenfalls hydrophilisiert. Typischerweise ist im Hohlraum dann kein Leuchten des Plasmas sichtbar.

Die zuvor beschriebenen Verfahren zum Oberflächenbehandeln wie z.B. zum Hydrophilisieren können insbesondere für eine der zuvor beschriebenen Probenkammern verwendet werden. Ein Verfahren zum Immobilisieren einer Substanz mit einem Konzentrationsgradienten an einer Oberfläche kann die Schritte aufweisen:
Bereitstellen einer Probenkammer mit einem Reservoir, insbesondere einer der zuvor beschriebenen Probenkammern
Behandeln einer Reservoiroberfläche, um ein Immobilisieren der Substanz zu ermöglichen, Befüllen des Reservoirs mit einem ersten Fluid,
teilweises Befüllen des Reservoirs mit einem zweiten Fluid, das die zu immobilisierende Substanz enthält, so dass sich in dem Reservoir eine Grenzfläche zwischen dem ersten und dem zweiten Fluid bildet,
Spülen des Reservoirs mit einem dritten Fluid nach einer vorherbestimmten Zeitdauer.

Unmittelbar nach dem Befüllen des Reservoirs mit dem zweiten Fluid weist die Reservoiroberfläche auf der einen Seite der Grenzfläche eine Substanzkonzentration von im Wesentlichen 0 auf. Während des Wartens für eine vorherbestimmte Zeitdauer findet eine Diffusion der Substanz statt, so dass die nach der vorherbestimmten Zeitdauer
an der Reservoiroberfläche immobilisierte Substanz einen Konzentrationsgradienten aufweist, der nach dem Spülen mit dem dritten Fluid auf Grund der Immobilisierung erhalten bleibt. Auf diese Weise kann ein definierter Oberflächenkonzentrationsgradient erzeugt werden.

Auch wenn unmittelbar nach dem Befüllen mit dem zweiten Fluid die Oberflächenkonzentration nicht im Wesentlichen 0 sein sollte, so ist doch beispielsweise ein parabolisches Abfallen vorhanden. Nach einer entsprechend langen Wartezeit sind die beiden Fluide durchmischt, wobei die Diffusionszeit bzw. die Diffusionskonstante von Parametern wie der Substanzgröße, Temperatur, Viskosität etc. abhängen kann. Vorzugsweise werden Flüssigkeiten als Fluide verwendet. Alternativ können jedoch auch Gase eingesetzt werden, wobei dann vorherbestimmte Druckverhältnisse in dem Reservoir eingestellt werden.

Das Behandeln einer Reservoiroberfläche, um ein Immobilisieren der Substanz zu ermöglichen, kann eine nasschemische Behandlung, umfassen. Beispiele für eine solche Nasschemie sind z.B. in S. Löfas and Bo Hohnson in J. Chem. Soc. ; Chem. Commun. 1990; 1526-1528 beschrieben. Der nasschemischen Behandlung kann eine Plasmabehandlung, wie zuvor beschrieben, vorangehen.

Als zu immobilisierende Substanz kann beispielsweise Streptavidin oder Biotin verwendet werden.

Weitere Merkmale werden an Hand der in den Figuren gezeigten beispielhaften Ausführungsformen erläutert. Dabei zeigen
- Fig. 1: eine Explosionsansicht einer Probenkammer mit einem flächigen Element in einem Reservoir;
- Fig. 2: eine Querschnittsansicht der Probenkammer aus Fig. 1;
- Fig. 3: eine Explosionsansicht einer Probenkammer mit einem flächigen Element geringerer Größe;
- Fig. 4: eine Explosionsansicht einer Probenkammer mit einer Mehrzahl nach oben offener Reservoire, bei der ein flächiges Element vorgesehen ist;
- Fig. 5: eine Explosionsansicht einer Probenkammer mit einer Mehrzahl nach oben offener Reservoire, in denen jeweils ein eigenes flächiges Element vorgesehen ist.

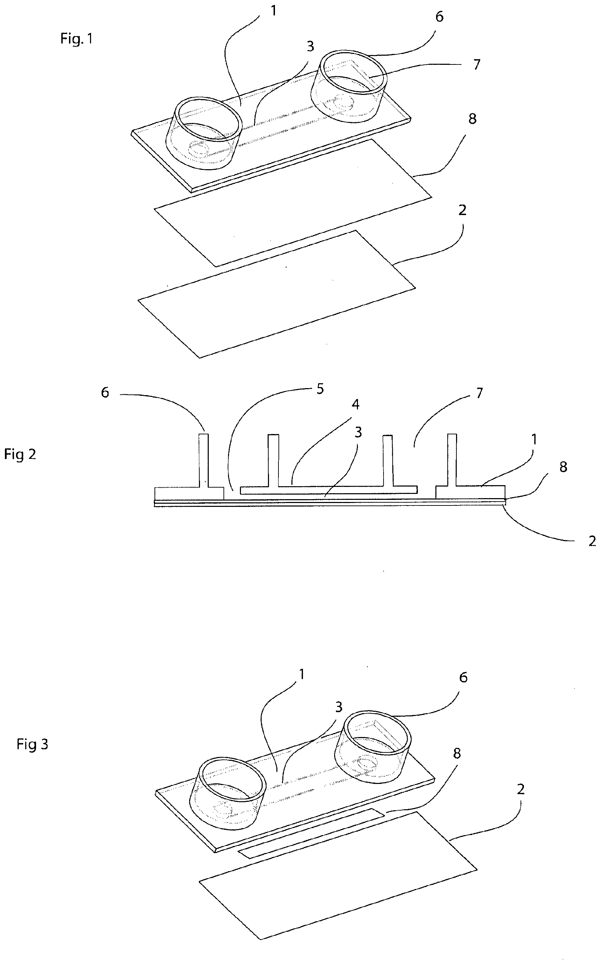

In Fig. 1 ist eine Explosionsansicht eines Ausführungsbeispiels einer Probenkammer gezeigt. Die Probenkammer umfasst eine Deckplatte 1 und eine Bodenplatte 2. In der Deckplatte 1 ist eine längliche Aussparung 3 vorgesehen. Wie insbesondere in Fig. 2 zu sehen ist, weist die Aussparung 3 einen Grund 4 auf, so dass auf diese Weise durch die Bodenplatte 2 ein Reservoir in Form eines Hohlraums in der Deckplatte und damit in der Probenkammer gebildet wird.

An den Enden der länglichen Aussparung ist jeweils ein Durchgangsloch 5 in der Deckplatte ausgebildet. Diese Kanäle dienen als Zufluss bzw. als Abfluss für das durch die Aussparung 3 gebildete Reservoir. Auf diese Weise wird eine Flusskammer gebildet.

Die der Aussparung 3 gegenüber liegende Oberfläche der Deckplatte ist in einem großen Bereich planar ausgebildet. Sie weist jedoch zwei Erhöhungen 6 auf, in denen jeweils eine Ausnehmung 7 ausgebildet ist. Auf diese Weise werden zwei weitere Reservoire bereitgestellt, die über ein Durchgangsloch 5 mit dem durch die Aussparung 3 gebildeten Reservoir fluidisch verbunden sind.

Zwischen der Deckplatte 1 und der Bodenplatte 2 ist ein flächiges Element 8 eingespannt. In dem durch die Aussparung 3 gebildeten Reservoir liegt dieses flächige Element 8 unmittelbar an der Bodenplatte 2 an.

Das flächige Element mit Öffnungen kann beispielsweise ein Elektromikroskopie-Grid aus mit Kohlenstoff beschichtetem Gold oder Kupfer, eine Folie mit vorherbestimmten Löchern oder ein Gewebe mit vorherbestimmter Maschenweite, Garndurchmesser und Dicke sein. Die optischen Eigenschaften des flächigen Elements können je nach gewünschter Anwendung geeignet gewählt werden. Beispielsweise können zur Durchlichtmikroskopie sehr kontrastreiche Netze, d.h. mit dunkler Färbung, verwendet
werden. Entsprechend können bei der Fluoreszenzmikroskopie flächige Elemente mit großer oder geringer Eigenfluoreszenz eingesetzt werden.

Das flächige Element kann einerseits dem Lokalisieren und andererseits dem Fixieren von Objekten dienen. Verwendet man beispielsweise ein Netz mit einer Dicke von 500 µm, einer Maschenweite von 100 µm, und wird dieses Netz unmittelbar an der Bodenplatte angeordnet, verbleiben bei laminarer Überströmung dieser Struktur Objekte, mit einem Durchmesser kleiner als 500 µm, in den Öffnungen. Für diese Anwendung kann der Abstand zwischen flächigem Element und Bodenplatte beispielsweise zwischen 0 und 100 µm liegen. Allerdings wird ein möglichst geringer Abstand bevorzugt, so dass weder Partikel noch Flüssigkeit zwischen der Bodenplatte und dem flächigen Element strömen können. Auf diese Weise dienen die Öffnungen in dem flächigen Element als Mikroreservoire.

Die Bodenplatte kann eine Folie mit einer Dicke von 150 - 200 µm sein. Je nach gewünschter Anwendung kann die Bodenplatte einen Brechungsindex von 1,5, eine minimale Eigenfluoreszenz und/oder eine minimale Doppelbrechung aufweisen. Geeignete Materialien sind beispielsweise Folien aus COC.

Grundsätzlich können die Deckplatte 1, das flächige Element 8 und die Bodenplatte 2 lösbar miteinander verbunden sein; dies kann beispielsweise über einen Klemmmechanismus erreicht werden.

In dem vorliegenden Ausführungsbeispiel sind jedoch die Bodenplatte 2, das flächige Element 8 und die Deckplatte 1 fest miteinander verbunden. Hierfür wird beispielsweise ein der Deckplatte zugewandter Bereich der Bodenplatte mit einer Haftschicht versehen. Alternativ oder zusätzlich kann dies auch mit einem der Bodenplatte zugewandten Bereich der Deckplatte geschehen.

Beispielsweise kann auf die Bodenplatte ein Klebstoff aufgebracht werden. Alternativ kann die Bodenplatte mit einem geeigneten Lösungsmittel, wie Methanol oder Toluol, oder Lösungsmitteldampf in Kontakt gebracht werden, so dass die Oberfläche angelöst und auf diese Weise eine Haftschicht gebildet wird. Anschließend werden die Bodenplatte 2 und die Deckplatte 1 mit dem dazwischen angeordneten flächigen Element 8 verpresst, um eine feste Verbindung herzustellen. Vorzugsweise ist die Haftschicht (durch die Verwendung einer ausreichenden Menge an Klebstoff oder Lösungsmittel) so ausgebildet, dass auch durch die Öffnungen des flächigen Elements hindurch eine Verbindung von Deckplatte 1 und Bodenplatte 2 erzeugt wird.

Auch andere Verbindungsverfahren sind geeignet, eine erfindungsgemäße Probenkammer herzustellen.

Bei der Verwendung von Klebstoff oder Lösungsmittel kann die Verbindungsstelle ggf. ein Zugang für ein Kriechmittel werden. Werden für die Probenkammer Materialien wie PC, PMMA, COC oder COP verwendet, können bei der Verwendung von Ölimmersionen für Mikroskopieanwendungen Öle zwischen der Bodenplatte und der Deckplatte in den Kunststoff eindringen und zu Spannungsrissen führen.

Ein derartiges Einwandern von Kriechmitteln kann beispielsweise durch thermisches Verschweißen der Bodenplatte und der Deckplatte verhindert werden. Dazu wird die Bodenplatte und/oder die Deckplatte streifenförmig entlang ihres Rands über die jeweilige Schmelztemperatur erwärmt; anschließend werden Bodenplatte und Deckplatte miteinander verpresst. Befindet sich zwischen der Bodenplatte und der Deckplatte in dem erwärmten Bereich auch ein Teil des flächenförmigen Elements 8 wird dieses entweder ebenfalls angeschmolzen oder in die angeschmolzene Oberfläche der Deckplatte und/oder der Bodenplatte gedrückt. Durch eine derartige Versiegelung der Seiten mittels thermischem Verschweißen wird ein Eindringen der meisten Kriechmittel verhindert. Wegen der streifenförmigen Erwärmung können, im Gegensatz zu einer flächigen Erwärmung der gesamten Bodenplatte und/oder Deckplatte, Verformungen der Bodenplatte oder Deckplatte vermieden werden.

Unabhängig von der Art der Haftschicht ist es wünschenswert, die Bodenplatte und die Deckplatte gleichmäßig zu verpressen; ein gleichmäßiger Druck soll auf alle Bereiche der Probenkammer ausgeübt werden. Insbesondere bei Probenkammern mit nichtplanarer Oberfläche, wie sie in den Figuren gezeigt sind, ist die Verwendung entsprechend ausgebildeter Pressstempel vorteilhaft. Die verwendeten Pressstempel können beispielsweise aus Aluminium sein. Vorteilhafterweise kann der Pressstempel eine zu der Deckplatte komplementäre Form aufweisen. Wird die Deckplatte beispielsweise durch ein Spritzgussverfahren hergestellt, kann der Pressstempel den Master des entsprechenden Spritzgussteils umfassen.

Auf Grund der Fertigungstoleranzen bei der Herstellung kann das Presselement ein Material mit einer Shorehärte A zwischen etwa 60 und 90 umfassen. Damit kann sich der Pressstempel während des Pressvorgangs gleichmäßig an die Deckplatte anpassen, was eine optimale Druckverteilung gewährleistet. Es können Pressstempel verwendet werden, die nicht passgenau an die Deckplatte angepasst sind, sondern ein gewisses Spiel (beispielsweise 500 µm) aufweisen.

Nach einer alternativen Möglichkeit kann das Verpressen der Grundplatte und der Bodenplatte in zwei Schritten erfolgen. Für jeden der beiden Schritte wird ein anderer Pressstempel verwendet. In einem ersten Schritt werden nur planare Bereiche der Deckplatte mit Druck beaufschlagt. Dafür weist der erste Pressstempel Aussparungen an den Erhöhungen der Deckplatte entsprechenden Stellen auf, so dass diese nicht mit Druck beaufschlagt werden. Der zweite Pressstempel ist derart ausgebildet, dass damit nur die nichtplanaren Bereiche, insbesondere die Erhöhungen, der Deckplatte mit Druck beaufschlagt werden. Dazu kann der zweite Pressstempel wenigstens teilweise eine komplementäre Form zu den Erhöhungen der Deckplatte aufweisen. Alternativ kann der zweite Pressstempel auch planar ausgebildet sein und insbesondere keine Aussparungen an den Erhöhungen entsprechenden Stellen aufweisen; damit könne dann nur die Erhöhungen der Deckplatte mit Druck beaufschlagt werden. Bei diesem Zweischrittverfahren ist die Verwendung eines weichen Materials möglich aber nicht erforderlich. Weiterhin können die beiden Pressschritte in anderer Reihenfolge durchgeführt werden.

Werden die Bodenplatte und die Deckplatte unter Verwendung eines Lösungsmittels verbunden, ist es von Vorteil, wenn das flächige Element ein Material umfasst, das durch dieses Lösungsmittel nicht aufgelöst werden kann. Allerdings kann das flächige Element ein Material umfassen, das durch ein anderes Lösungsmittel aufgelöst werden kann. In diesem Fall können zuerst die Bodenplatte und die Deckplatte unter Verwendung des ersten Lösungsmittels verbunden werden. Wenn die gesamte der Deckplatte zugewandte Seite der Bodenplatte mit dem ersten Lösungsmittel behandelt wird und das flächige Element unmittelbar auf der Bodenplatte aufliegt, drückt sich das flächige Element bei dem Verpressen in die Bodenplatte ein. Nach dem Aushärten der Haftschicht kann ein Lösungsmittel in das Reservoir eingebracht werden, durch das das flächige Element aufgelöst, die Bodenplatte und die Deckplatte jedoch
nicht angegriffen wird. Der verbleibende Abdruck kann als Lokalisierungsraster verwendet werden.

Die durch die Öffnungen in dem flächigen Element gebildeten Mikroreservoire können bei verschiedenen Analyseverfahren eingesetzt werden. Beispielsweise können in den Mikroreservoiren Suspensionskulturen gehalten werden, die dann bei einem Mediumsaustausch in dem Reservoir nicht weggespült werden. Da in den Mikroreservoiren auch bei einem Fluss durch das Reservoir nur sehr geringe Strömungsgeschwindigkeiten herrschen, verbleiben auch nichtadhärente Zellen oder Moleküle in den Öffnungen. Weiterhin ist ein schneller Lösungsaustausch in dem Reservoir möglich, da die Diffusionsbarriere in einem Bereich von höchstens mehreren 100 µm liegt.

Weiterhin können mit derartigen Probenkammern chemotaktische Untersuchungen durchgeführt werden. Wird in der Flüssigkeit in dem Reservoir ein Konzentrationsgradient einer Substanz ausgebildet, kann beispielsweise die Wanderung von zuvor in den Öffnungen des flächigen Elements gleichmäßig verteilten Zellen in eine Richtung innerhalb der Mikroreservoire beobachtet werden. Anschließend kann die Verteilung von chemotaktisch sensitiven Zellen in den verschiedenen Mikroreservoiren statistisch untersucht werden, um Aussagen über die Zellmobilität zu treffen. Bei Einsatz einer regelmäßigen Anordnung der Öffnungen, beispielsweise bei Verwendung eines Netzes, können auf der Fouriertransformation beruhende Algorithmen für die Analyse von Verteilungen in Netzstrukturen verwendet werden.

Durch eine geeignete Wahl der Anordnung der Öffnungen in dem flächigen Element kann man Zellen in einer bestimmten Morphologie wachsen lassen. Beispielsweise können Netze mit Maschenweiten eingesetzt werden, die in der Größenordnung der Zellen liegen oder kleiner sind. Die Maschenweiten können beispielsweise 2 µm bis 100 µm betragen. In größeren Maschen können Zellen in einer dreidimensionalen Struktur wachsen.

In dem durch die Aussparung 3 gebildeten Reservoir kann die Oberfläche der Deckplatte 1 und der Bodenplatte 3 mit einer Korona-Behandlung oberflächenbehandelt, insbesondere hydrophilisiert werden. Besonders geeignete Materialien für die Boden- und Deckplatte sind in diesem Fall COC, COP oder PS. Das Plasma wird unter Atmosphärendruck erzeugt.

Bessere Resultate als mit gewöhnlicher Umgebungsluft lassen sich bei der Verwendung von Stickstoff als Wirkgas erzielen. Das Plasma wird nach seiner Erzeugung beispielsweise durch ein Durchgangsloch 5 in das durch die Aussparung 3 gebildete Reservoir geleitet. Die entsprechende Plasmaaktivierung zeigt sich dann beispielsweise durch ein Aufleuchten des Plasmas im Reservoir.

Durch eine Kühlung des Plasmagases und/oder der Probenkammer kann ein Anschmelzen oder Verbrennen des Materials der Bodenplatte, Deckplatte und des flächigen Elements verhindert werden. Durch die Kühlung kann weiterhin eine Verformung der Elemente der Probenkammer verhindert werden. Ein weiterer Vorteil einer derartigen Plasmabehandlung besteht darin, dass sich die optischen Eigenschaften von Kunststoffen wie COC, COP, PS, PS, PC oder PMMA nur unwesentlich verändern. Eine derartige Plasmabehandlung ist nicht an die zuvor beschriebenen, speziellen Ausgestaltungen der Probenkammer gebunden.

Falls bei einer der beschriebenen Probenkammern ein Plasmabehandlung durchgeführt wird, wird vorzugsweise ein flächiges Element verwendet, das sich durch die Plasmabehandlung nicht oder nur unwesentlich hydrophilisieren lässt. Auf diese Weise können in den Öffnungen des flächigen Elements wässrige Tropfen besonders gut gehalten werden.

Weiterhin können in den beschriebenen Probenkammern Oberflächenkonzentrationsgradienten an immobilisierten Substanzen in den Reservoiren erzeugt werden. Wie bereits oben beschrieben, kann hierfür nach einer Aktivierung einer Reservoiroberfläche eine nichtreaktive Flüssigkeit in das Reservoir eingefüllt werden. Danach wird eine weitere Flüssigkeit mit den zu immobilisierenden Substanzen bis zu einem bestimmten Punkt des Reservoirs gefüllt, so dass sich zwischen den Flüssigkeiten mit und ohne zu immobilisierenden Substanzen ein Grenzbereich bildet. Zu Beginn kann dieser Grenzbereich ein parabolisches Konzentrationsprofil aufweisen. Nach einer geeigneten Wartezeit sind die Flüssigkeiten durchmischt und die Substanz mit einem definierten Oberflächenkonzentrationsgradienten immobilisiert. Anschließend kann das Reservoir gespült werden.

Die verwendeten Flüssigkeiten können je nach Material der Probenkammer oder Plasma neben den zu immobilisierenden Substanzen weitere Substanzen beispielsweise zur Passivierung oder Aktivierung enthalten. Weiterhin können Katalysatoren zur Einstellung der Reaktionsgenetik bereitgestellt werden. Die zu immobilisierende Substanz kann als Teil eines größeren Komplexes, beispielsweise eines Moleküls, eingebracht werden und dann auf der Oberfläche abgespalten werden. Außerdem kann die Immobilisierung von unterschiedlichen Substanzen in mehreren, aufeinanderfolgenden Schritten durchgeführt werden.

Figur 3 zeigt ein weiteres Ausführungsbeispiel einer Probenkammer mit einem flächigen Element. Im Gegensatz zu dem Ausführungsbeispiel der Figur 1 entspricht in der Figur 3 die Fläche des flächigen Elements nicht mehr der Fläche der Bodenplatte. Stattdessen entspricht die Fläche des Elements 8 der Größe der Aussparung 3. In diesem Fall wird das Element 8 nicht durch die Bodenplatte 2 und die Deckplatte 1 eingespannt. Das flächige Element 8 kann beispielsweise mit einem Klebstoff an der Bodenplatte 2 oder an der Deckplatte 1 (insbesondere an dem Grund der Aussparung) fixiert werden. Alternativ kann das flächige Element mit einem Lösungsmittel angelöst werden und auf diese Weise mit der Bodenplatte oder der Deckplatte verbunden werden. Gemäß einer weiteren Alternative kann das flächige Element ohne feste Verbindung in dem Reservoir angeordnet sein.

Die Abmessungen des flächigen Elements 8 können auch etwas größer oder etwas kleiner als die Dimensionierung der Aussparung gewählt werden. In ersterem Fall ist ein Einspannen zwischen Bodenplatte und Deckplatte möglich. Hierfür kann das flächige Element 8 Kantenlängen aufweisen, die um 5 bis 500 µm größer sind als die entsprechenden Abmessungen der Aussparung 3.

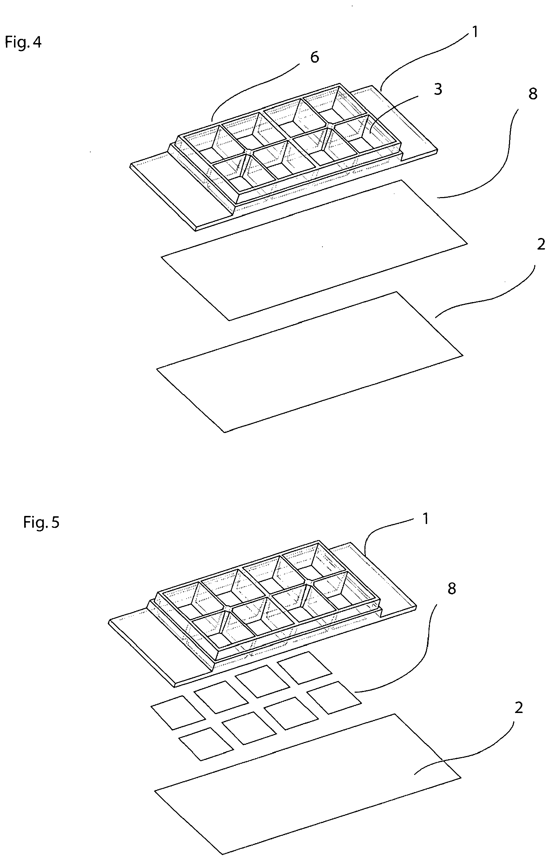

Figur 4 zeigt eine weitere Probenkammer. Hier sind in der Deckplatte 1 acht Aussparungen 3 vorgesehen. Diese Aussparungen weisen keinen Grund auf und sind als Loch in der Deckplatte ausgebildet. Durch die entsprechenden Erhöhungen 6 werden acht Reservoire 3 gebildet, die nach oben bzw. außen vollständig offen sind. Entsprechend dem Ausführungsbeispiel von Figur 1 ist auch hier ein flächiges Element 8 vorgesehen, dessen Dimensionen den Abmessungen der Bodenplatte entsprechen.

Bei diesen offenen Reservoiren kann die Bodenplatte von oben durch die Öffnungen des flächigen Elements mit bestimmten Molekülen gespottet werden. Durch die Anordnung der Öffnungen wird die Spotmorphologie verbessert. Insbesondere ist eine gleichmäßigere Verteilung der zu spottenden Moleküle möglich. Durch die Verwendung unterschiedlicher Spots kann beispielsweise getestet werden, welche Molekül- oder Molekül-Zell-Interaktionen statfinden.

In Figur 5 ist eine Probenkammer gezeigt, deren Bodenplatte 2 und Deckplatte 1 den aus Figur 4 entsprechen. In diesem Ausführungsbeispiel ist jedoch für jedes Reservoir ein eigenes flächiges Element 8 vorgesehen. Analog zu dem in Figur 3 gezeigten Beispiel können auch hier die Abmessungen eines flächigen Elements kleiner oder größer als die Dimensionen der entsprechenden Reservoirgrundfläche sein oder eine gleiche Größe aufweisen. Wird das flächige Element nicht zwischen Bodenplatte und Deckplatte geklemmt, kann es entweder fest mit der Bodenplatte verbunden werden oder lose aufliegen.

## Patentansprüche

1. Verfahren zum Oberflächenbehandeln, insbesondere zum Hydrophilisieren, einer Reservoiroberfläche in einer Probenkammer, wobei die Probenkammer eine Deckplatte und eine fest damit verbundene Bodenplatte umfasst, wobei in der Deckplatte eine Aussparung mit Grund vorgesehen ist, so dass durch die Bodenplatte ein Hohlraumreservoir gebildet wird, mit den Schritten:
Führen eines Plasmas oder eines Abgases eines Plasmas zu einem Zu-/Abfluss des Hohlraumreservoirs, wo es in das Hohlraumreservoir geleitet werden kann,
Führen des Plasmas oder des Abgases des Plasmas durch das Hohlraumreservoir zur Plasmabehandlung der Reservoiroberfläche,
wobei für das Plasmabehandeln ein Atmosphärenplasma mit Stickstoff als Wirkgas verwendet wird.

2. Verfahren nach Anspruch 1, wobei das Plasmabehandeln ein Kühlen des Plasmas und/oder der Probenkammer umfasst.

3. Verfahren nach einem der vorangegangenen Ansprüche, wobei das Plasma oder das Abgas des Plasmas durch ein Rohr zu dem Zu-/Abfluss des Reservoirs geführt wird.

## Claims

1. Method of surface treatment, in particular for the hydrophilisation, of a reservoir surface in a sample chamber, wherein the sample chamber comprises a cover plate and a bottom plate joined thereto in a fixed manner, wherein a recess with a base is provided in the cover plate so that a cavity reservoir is formed by the bottom plate, comprising the steps:
leading a plasma or a waste gas of a plasma to a feed/outlet of the cavity reservoir, where it can be passed into the cavity reservoir,
passing the plasma or the waste gas of the plasma through the cavity reservoir for the plasma treatment of the reservoir surface,
wherein an atmospheric plasma with nitrogen as the active gas is used for the plasma treatment.

2. Method according to claim 1, wherein the plasma treatment comprises cooling of the plasma and/or the sample chamber.

3. Method according to any one of the preceding claims, wherein the plasma or the waste gas of the plasma is led through a pipe to the feed/outlet of the reservoir.

## Revendications

1. Procédé pour le traitement de surface, notamment pour hydrophiliser une surface de réservoir dans une chambre d'échantillon, la chambre d'échantillon comportant une plaque de recouvrement et une plaque de base, qui y est reliée de manière fixe, et dans la plaque de recouvrement il est prévu un évidement avec un fond, de sorte que la plaque de base forme une cavité-réservoir, le procédé comprenant les étapes consistant à :
amener un plasma ou des émissions de gaz de plasma à une entrée/sortie d'écoulement de la cavité-réservoir, où il peut être dirigé ou elles peuvent être dirigées vers l'intérieur de la cavité-réservoir,
amener et guider le plasma ou les émissions de gaz de plasma à travers la cavité-réservoir pour le traitement au plasma de la surface de réservoir,
procédé d'après lequel on utilise pour le traitement au plasma, un plasma atmosphérique avec de l'azote comme gaz réactif.

2. Procédé selon la revendication 1, d'après lequel le traitement au plasma comprend un refroidissement du plasma et/ou de la chambre d'échantillon.

3. Procédé selon l'une des revendications précédentes, d'après lequel le plasma ou les émissions de gaz de plasma est amené ou sont amenées par un tube à l'entrée/sortie d'écoulement du réservoir.
